# EUROPÄISCHE PATENTSCHRIFT

(11) **EP 2 998 744 B1**
(45) Veröffentlichungstag und Bekanntmachung des Hinweises auf die Patenterteilung: **02.11.2016**
(21) Anmeldenummer: 14185080.0
(22) Anmeldetag: 17.09.2014
(51) Int. Cl.: G01N 35/00

(54) **Inkubationseinrichtung für ein automatisches Analysegerät**
Incubation device for an automatic analyser
Dispositif d'incubation pour un appareil d'analyse automatique

(43) Veröffentlichungstag der Anmeldung: 23.03.2016
(73) Patentinhaber: Siemens Healthcare Diagnostics Products GmbH, 35041 Marburg (DE)
(72) Erfinder: Michels, Thorsten, 64521 Gross-Gerau (DE); Pufahl, Holger, 65835 Liederbach (DE)

(56) Entgegenhaltungen:
- WO-A1-02/066598
- DE-A1- 3 736 632
- DE-C2- 2 726 323
- JP-A- H10 267 936

## Beschreibung

Die Erfindung betrifft eine Inkubationseinrichtung für ein automatisches Analysegerät, welche eine Inkubationseinheit mit einer Anzahl von Aufnahmepositionen für Reaktionsgefäße und mindestens zwei Transferarme mit jeweils einer Greifeinrichtung für ein oder mehrere Reaktionsgefäße umfasst.

Zahlreiche Nachweis- und Analyseverfahren zur Bestimmung von Analyten in Körperflüssigkeitsproben oder anderen biologischen Proben werden heute automatisiert in großer Anzahl in automatischen Analysegeräten, auch sog. In-Vitro-Diagnostiksystemen, durchgeführt. Hierzu umfassen derartige Analysegeräte üblicherweise entsprechende Analyse- oder Messstationen sowie eine Reihe von Transportvorrichtungen, z.B. Transportbänder, Transportkarussells oder Transferarme mit Greifvorrichtungen für Probengefäße, Reagenzbehälter und Reaktionsgefäße, und ferner Pipettiervorrichtungen für den Transfer von Flüssigkeiten. Die Geräte umfassen weiterhin eine Steuereinheit, die mittels entsprechender Software dazu in der Lage ist, die Arbeitsschritte für die gewünschten Analysen weitgehend selbstständig zu planen und abzuarbeiten.

Viele der in derartigen automatisiert arbeitenden Analysegeräten verwendeten Analyseverfahren beruhen auf optischen Methoden. Die Bestimmung klinisch relevanter Parameter, wie zum Beispiel der Konzentration oder Aktivität eines Analyten, erfolgt vielfach, indem ein Teil einer Probe mit einem oder mehreren Testreagenzien in einem Reaktionsgefäß, welches auch die Messzelle sein kann, vermischt wird, wodurch eine biochemische Reaktion oder eine spezifische Bindungsreaktion in Gang gesetzt wird, die eine messbare Veränderung einer optischen oder anderen physikalischen Eigenschaft des Reaktionsansatzes bewirkt.

Üblicherweise wird ein Probenaliquot mittels einer automatischen Pipettiervorrichtung aus einem Probengefäß entnommen und in ein Reaktionsgefäß transferiert. Durch Zugabe eines oder mehrerer Reagenzien wird ein Reaktionsansatz bereit gestellt.

Innerhalb des automatischen Analysegeräts werden die Reaktionsgefäße dann typischerweise mit Transferarmen zu den verschiedenen Stationen der Analyse bewegt. Diese Transferarme weisen eine Greifeinrichtung zum sicheren Erfassen und Abgeben der Reaktionsgefäße auf und haben einen durch die Reichweite der Bewegungsmechanik gegebenen (und ggf. steuerungs- bzw. softwareseitig noch weiter eingeschränkten) Zugriffsbereich, in dem Reaktionsgefäße erfasst oder abgegeben werden können.

Nach dem Zusammenführen der Probe und der Reagenzien in dem Reaktionsgefäß bedürfen viele zur Analyse verwendete Nachweisreaktionen einer gewissen Inkubationszeit, die einige Minuten betragen kann. Während dieser Inkubationszeit reagieren die Reagenzkomponenten, wie z.B. Enzyme, Enzymsubstrate oder Antikörper, mit dem nachzuweisenden Analyten. Da viele Nachweisreaktionen temperaturabhängig sind, erfolgt die Inkubation der Reaktionsansätze in der Regel in einer Inkubationseinheit, die mehrere Aufnahmepositionen zur Zwischenlagerung der Reaktionsgefäße aufweist, wobei die Wandungen der Aufnahmepositionen mittels Heizung/Kühlung auf einer vorgegebenen, kontrollierten Temperatur gehalten werden können.

Die Inkubationseinheit ist dabei in einer Inkubationseinrichtung des automatischen Analysegeräts angeordnet, die weiterhin zumindest einen der vorbeschriebenen Transferarme zur Abgabe von Reaktionsgefäßen in die Aufnahmepositionen und zur Entnahme von Reaktionsgefäßen aus den Aufnahmepositionen der Inkubationseinheit aufweist. Die Reaktionsgefäße können mit Hilfe eines Transferarms beispielsweise in leerem Zustand aus einem Reaktionsgefäßvorrat in die Inkubationseinheit transferiert werden, oder sie können in teilweise befülltem Zustand, beispielsweise lediglich die Probenflüssigkeit enthaltend aus einer entsprechenden Station des Analysegeräts in die Inkubationseinheit transferiert werden, oder sie können in vollständig befülltem Zustand, enthaltend den kompletten Reaktionsansatz aus einer entsprechenden Station des Analysegeräts in die Inkubationseinheit transferiert werden. Ferner müssen die Reaktionsgefäße nach der Inkubationszeit mit Hilfe eines Transferarms in die Messeinheit transferiert werden. Soll der Durchsatz des automatischen Analysegeräts erhöht werden, d.h. es sollen mehr Proben in kürzerer Zeit analysiert werden können, kann die Inkubationseinrichtung auch mehrere Transferarme, d.h. zumindest einen zweiten Transferarm umfassen, die auf die Inkubationseinheit zugreifen können. Hierbei besteht jedoch das Problem, dass es unter Umständen zu einer Kollision der Transferarme kommen kann, die zur Vermeidung von Schäden und Betriebsunterbrechungen unbedingt vermieden werden muss. Es hat sich herausgestellt, dass eine derartige Kollisionsvermeidung softwaretechnisch vergleichsweise aufwändig umzusetzen ist: Die Software-Steuerung muss stets koordinieren, welcher der Transferarme aktuell an welcher Position ist und den jeweiligen Transferarm ggf. entfernen, damit ein anderer Transferarm zugreifen kann.

Es ist daher Aufgabe der Erfindung, eine Inkubationseinrichtung und ein Verfahren zum Bewegen eines oder mehrerer Reaktionsgefäße in einer derartigen Inkubationseinrichtung anzugeben, die einen größeren Probendurchsatz des automatischen Analysegeräts bei gleichzeitig reibungslosem und sicherem Betrieb erlauben.

Diese Aufgabe wird bezüglich der Inkubationseinrichtung erfindungsgemäß gelöst, indem zwei Transferarme für den Transfer von Reaktionsgefäßen in oder aus der Inkubationseinheit vorgesehen sind, wobei die Zugriffsbereiche der beiden Transferarme nicht überlappen, also voneinander getrennt sind, und die Inkubationseinheit derart bewegbar gelagert ist, beispielsweise auf einer Transportschiene oder einem Schlitten, dass zumindest eine der Aufnahmepositionen beide Zugriffsbereiche der beiden Transferarme erreicht. Die Inkubationseinheit fährt dann bei einer Zugriffsanforderung eines Transferarms zumindest mit der entsprechenden Aufnahmeposition, auf die zugegriffen werden soll, in den Zugriffsbereich des jeweils zugreifenden Transferarms. Es hat sich überraschend herausgestellt, dass der durch die fahrbare Inkubationseinheit erzeugte mechanische Mehraufwand durch die erhebliche Vereinfachung der Steuersoftware mehr als ausgeglichen wird und zudem wesentlich sicherer ist.

Gegenstand der vorliegenden Erfindung ist damit eine Inkubationseinrichtung für ein automatisches Analysegerät, die folgende Komponenten umfasst:
- eine Inkubationseinheit mit einer Anzahl von Aufnahmepositionen für Reaktionsgefäße,
- einen ersten Transferarm mit einer Greifeinrichtung für ein oder mehrere Reaktionsgefäße, der dafür ausgebildet ist, die Greifeinrichtung in einen ersten Zugriffsbereich zu bewegen, und
- einen zweiten Transferarm mit einer Greifeinrichtung für ein oder mehrere Reaktionsgefäße, der dafür ausgebildet ist, die Greifeinrichtung in einen zweiten Zugriffsbereich zu bewegen,
wobei der erste und der zweite Zugriffsbereich nicht überlappen und die Inkubationseinheit derart bewegbar gelagert ist, dass zumindest eine der Aufnahmepositionen den ersten und den zweiten Zugriffsbereich erreicht.

Bezüglich des Verfahrens zum automatisierten Bewegen eines oder mehrerer Reaktionsgefäße wird die Aufgabe gelöst, indem der erste und der zweite Zugriffsbereich nicht überlappen und bei einem Zugriff eines der Transferarme die Inkubationseinheit derart bewegt wird, dass zumindest eine der Aufnahmen jeweiligen Zugriffsbereich des zugreifenden Transferarms erreicht.

Ein weiterer Gegenstand der vorliegenden Erfindung ist also ein Verfahren zum automatisierten Bewegen eines oder mehrerer Reaktionsgefäße in einer wie oben beschriebenen Inkubationseinrichtung, wobei die Inkubationseinheit derart bewegt wird, dass zumindest eine der Aufnahmepositionen den jeweiligen Zugriffsbereich des zugreifenden Transferarms erreicht.

Vorteilhafterweise ist die Inkubationseinheit derart bewegbar gelagert, dass jede der Aufnahmepositionen den ersten und den zweiten Zugriffsbereich erreicht. Mit anderen Worten, die Bewegungsfähigkeit der Inkubationseinheit geht so weit, dass jeder der Transferarme auf jede der Aufnahmepositionen zugreifen kann. Hierdurch ergibt sich eine größtmögliche Flexibilität hinsichtlich der automatisierten Arbeitsabläufe in der Inkubationseinrichtung, da beliebige Aufnahmepositionen für Reaktionsgefäße für die Inkubation verwendet werden können, ohne dass auf eine beschränkte Erreichbarkeit durch einzelne Transferarme Rücksicht genommen werden müsste.

Noch weiter vereinfachen lässt sich der Prozess, indem die Inkubationseinheit derart bewegbar gelagert ist, dass sie eine erste Position erreicht, in der jede der Aufnahmepositionen im ersten Zugriffsbereich liegt und/oder derart bewegbar gelagert ist, dass sie eine zweite Position erreicht, in der jede der Aufnahmepositionen im zweiten Zugriffsbereich liegt. Bezüglich des Verfahrens wird dabei vorteilhafterweise die Inkubationseinheit derart in eine Position bewegt, dass jede der Aufnahmen den jeweiligen Zugriffsbereich des zugreifenden Transferarms erreicht.

In einer derartigen Ausgestaltung ist einem Transferarm und seinem jeweiligen Zugriffsbereich genau eine Position der Inkubationseinheit zugeordnet. Bei einer Zugriffsanforderung eines Transferarms wird die Inkubationseinheit in die dem zugreifenden Transferarm zugeordnete Position bewegt, ohne dass dabei berücksichtigt werden müsste, auf welche der Aufnahmepositionen der Inkubationseinheit der Transferarm zugreifen soll. Dies vereinfacht die softwareseitige Steuerung der Inkubationseinheit, für die nur noch jeweils eine Position pro Transferarm vorgegeben ist. Zwischen diesen Positionen bewegt sich die Inkubationseinheit, wobei zur Bewegung in die jeweilige Position nur eine softwareseitige Zugriffsanforderung des zugreifenden Transferarms an die Inkubationseinheit nötig ist.

In weiterer vorteilhafter Ausgestaltung der Inkubationseinrichtung und des Verfahrens sind bzw. werden die Transferarme in ihrer Bewegung derart eingeschränkt, dass eine gegenseitige Berührung ausgeschlossen ist. Dies kann sowohl softwareseitig geschehen, als auch noch vorteilhafter durch eine hardwaretechnische Auslegung derart, dass eine Berührung geometrisch nicht mehr möglich ist. Dies kann durch eine mechanische Begrenzung der Bewegungswege der Transferarme geschehen. Eine derartige Maßnahme schließt eine Berührung der Transferarme besonders sicher aus und sorgt somit für einen besonders sicheren und störungsfreien Betrieb des automatischen Analysegeräts.

In einer bevorzugten Ausführungsform der erfindungsgemäßen Inkubationseinrichtung liegen der erste und der zweite Zugriffsbereich der Transferarme in derselben horizontalen Ebene, und die Inkubationseinheit ist horizontal bewegbar gelagert, z.B. auf horizontalen Schienen oder auf einem Schlitten. Bezüglich des erfindungsgemäßen Verfahrens wird die Inkubationseinheit in dieser Anordnung horizontal bewegt.

Bevorzugterweise sind die Aufnahmepositionen der Inkubationseinheit temperierbar. Dazu umfasst die Inkubationseinheit entsprechende Heiz- und/oder Kühlvorrichtungen.

Ein weiterer Gegenstand der vorliegenden Erfindung ist ein automatisches Analysegerät, das eine beschriebene Inkubationseinrichtung enthält und dadurch einen besonders sicheren und störungsfreien Betrieb aufweist.

Ein bevorzugtes automatisches Analysegerät umfasst eine erste Einheit zur Messung einer ersten physikalischen Eigenschaft eines Reaktionsansatzes und eine zweite Einheit zur Messung einer zweiten physikalischen Eigenschaft eines Reaktionsansatzes, also zwei Messstationen. Vorteilhafterweise sind die beiden Messstationen jeweils zur Messung mindestens einer optischen Eigenschaft eines Reaktionsansatzes ausgebildet. Die erste und die zweite Einheit zur Messung einer optischen Eigenschaft eines Reaktionsansatzes können beispielweise aus der Gruppe Photometer, Nephelometer, Turbidimeter und Luminometer ausgewählt sein.

Unter einem "Photometer" ist eine Messeinheit zu verstehen, die mindestens eine Lichtquelle und mindestens einen Lichtdetektor aufweist und die so ausgestaltet ist, dass sie die Messung der Absorbanz von Licht einer bestimmten Wellenlänge in einer Probe oder einem Reaktionsansatz ermöglicht. Typischerweise ist die Wellenlänge des von der Lichtquelle emittierten Lichts so gewählt, dass es von einer in der Probe nachzuweisenden Substanz, beispielsweise von einem Chromophor, das infolge einer Analyt-abhängigen Reaktion in einem Reaktionsansatz entsteht, absorbiert wird. Unter einem "Turbidimeter" ist eine Messeinheit zu verstehen, die mindestens eine Lichtquelle und mindestens einen Lichtdetektor aufweist und die so ausgestaltet ist, dass sie die Messung der Absorbanz von Licht in einer Probe oder einem Reaktionsansatz ermöglicht. Typischerweise ist die Wellenlänge des von der Lichtquelle emittierten Lichts so gewählt, dass es von in der Probe nachzuweisenden Makromolekülen, beispielsweise von Partikelaggregaten, die infolge einer Analyt-abhängigen Reaktion in einem Reaktionsansatz entstehen, absorbiert wird.

Unter einem "Nephelometer" ist eine Messeinheit zu verstehen, die mindestens eine Lichtquelle und mindestens einen Lichtdetektor aufweist und die so ausgestaltet ist, dass sie die Messung der Absorbanz von Licht in einer Probe oder einem Reaktionsansatz ermöglicht. Typischerweise ist die Anordnung von Lichtquelle und Lichtdetektor so gewählt, dass das Streulicht messbar ist, das von in der Probe nachzuweisenden Makromolekülen, beispielsweise von Partikelaggregaten, die infolge einer Analyt-abhängigen Reaktion in einem Reaktionsansatz entstehen, gestreut wird.

Unter einem "Luminometer" ist eine Messeinheit zu verstehen, die mindestens einen Lichtdetektor, üblicherweise einen Photomultiplier, aufweist und die so ausgestaltet ist, dass sie die Messung der Emission von Licht aus einer Probe oder aus einem Reaktionsansatz ermöglicht. Typischerweise ist der Lichtdetektor so gewählt, dass damit Biolumineszenz, Chemilumineszenz und/oder Fluoreszenz messbar ist, die von einer in der Probe nachzuweisenden Substanz, beispielsweise von einer lumineszierenden oder fluoreszierenden Signalgruppe, die infolge einer Analyt-abhängigen Reaktion in einem Reaktionsansatz entsteht, emittiert wird.

Die mit der Erfindung erzielten Vorteile bestehen insbesondere darin, dass durch die Trennung der Zugriffsbereiche der Transferarme in Verbindung mit einer zwischen den Zugriffsbereichen bewegbaren Inkubationseinheit eine Berührung der Transferarme auf softwareseitig besonders einfache Weise vermieden wird. Dadurch wird ein sicherer, störungsfreier Betrieb der Inkubationseinrichtung ermöglicht, und es kann ein besonders hoher Durchsatz des automatischen Analysegeräts erreicht werden.

Die Erfindung wird anhand einer Zeichnung näher erläutert. Darin zeigen:
- FIG 1: eine schematische Darstellung eines automatischen Analysegeräts,
- FIG 2: eine schematische Darstellung der Inkubationseinrichtung des automatischen Analysegeräts in einer Aufsicht, und
- FIG 3: eine schematische Darstellung der Inkubationseinrichtung in einer Vorderansicht.

Gleiche Teile sind in allen Figuren mit denselben Bezugszeichen versehen.

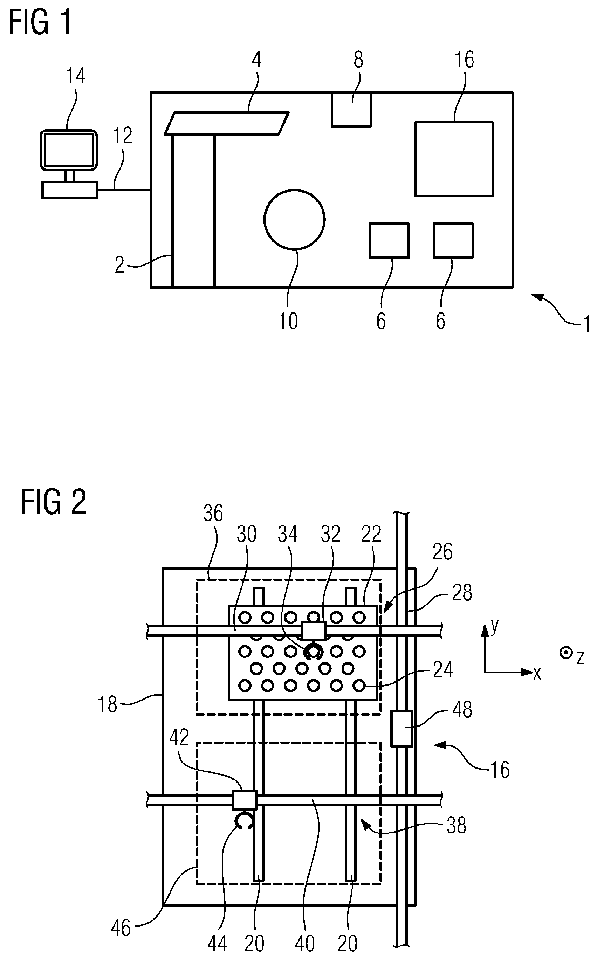

FIG 1 zeigt eine schematische Darstellung eines automatischen Analysegeräts 1 mit einigen darin enthaltenen Bauteilen. Hierbei werden nur die wichtigsten Bauteile stark vereinfacht dargestellt, um die grundsätzliche Funktion des automatischen Analysegeräts 1 zu erläutern, ohne hierbei detailliert die einzelnen Teile jedes Bauteils darzustellen.

Das automatische Analysegerät 1 ist dafür ausgebildet, vollautomatisch verschiedenste Analysen von Blut oder anderen Körperflüssigkeiten durchzuführen, ohne dass hierfür Aktivitäten eines Benutzers notwendig wären. Diese beschränken sich vielmehr auf Wartung oder Reparatur und Nachfüllarbeiten, wenn z.B. Reaktionsgefäße oder Reagenzien nachgefüllt werden müssen.

Die Proben werden dem automatischen Analysegerät 1 auf nicht näher dargestellten Schlitten in einer Zuführungsschiene 2 zugeführt. Informationen hinsichtlich der pro Probe durchzuführenden Analysen können hierbei beispielsweise mittels auf den Probengefäßen angebrachten Strichcodes übergeben werden, die im automatischen Analysegerät 1 ausgelesen werden. Aus den Probengefäßen werden in einer Pipettiereinrichtung 4 Aliquots mittels einer nicht näher dargestellten Pipettiernadel entnommen.

Die Aliquots werden ebenfalls nicht näher dargestellten Reaktionsgefäßen zugeführt, in denen die eigentlichen Analysen mittels verschiedenster Messeinheiten 6 wie z.B. Photometern, Nephelometern, Turbidimetern oder Luminometern etc. durchgeführt werden. Die Reaktionsgefäße werden aus einem Reaktionsgefäßspeicher 8 entnommen. Zusätzlich können aus einem Reagenzienspeicher 10 mittels einer weiteren, nicht dargestellten Pipettiernadel weitere Reagenzien dem jeweiligen Reaktionsgefäß zugeführt werden, die je nach durchzuführender Analyse erforderlich sind.

Der Transport der Küvetten innerhalb des automatischen Analysegeräts erfolgt mit hier nicht näher dargestellten Transporteinrichtungen, wie z.B. Transferarmen, die in verschiedenste Raumrichtungen bewegbar sind und eine Greifeinrichtung zum Erfassen der Reaktiongefäße aufweisen. Der gesamte Prozess wird von einer Steuereinrichtung, wie z.B. von einem über eine Datenleitung 12 angeschlossenen Rechner 14 gesteuert, unterstützt durch eine Vielzahl weiterer, nicht näher dargestellter elektronischer Schaltungen und Mikroprozessoren innerhalb des automatischen Analysegeräts 1 und seiner Bauteile.

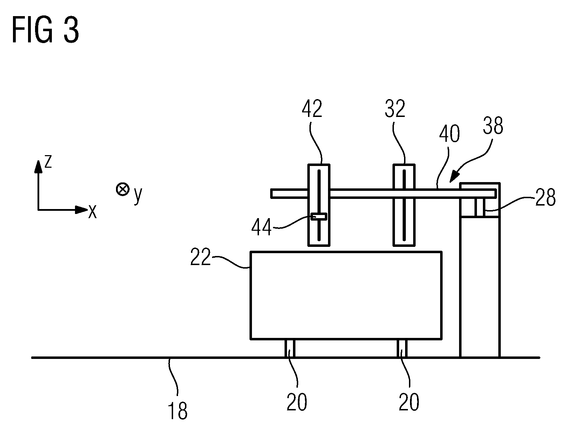

Nach dem Zusammenführen der Probe und der Reagenzien in dem Reaktionsgefäß beruhen viele zur Analyse verwendete Nachweisreaktionen auf der Messung bestimmter Eigenschaften eines entstandenen Reaktionsproduktes nach dem Ablauf einer gewissen Reaktionszeit. Während dieser Reaktionszeit reagieren bestimmte Enzyme, Antikörper oder ähnliches mitdem zu bestimmenden Analyten. Während der Reaktionszeit werden die Reaktionsgefäße dabei in einer Inkubationseinrichtung 16 des automatischen Analysegeräts 1 gelagert, die in FIG 2 und FIG 3 schematisch näher dargestellt ist.

Die Inkubationseinrichtung 16 ist in der FIG 2 in einer Aufsicht, in der FIG 3 in einer Vorderansicht dargestellt. Zur Beschreibung der FIG 2 und FIG 3 werden im Folgenden Raumrichtungen verwendet, die in beiden Figuren jeweils angepasst auf die Blickrichtung gezeigt sind. In FIG 2 verläuft die Raumrichtung x von links nach rechts, die Raumrichtung y von unten nach oben und die Raumrichtung z aus der Bildebene heraus. Die FIG 3 ist in ihrer Ansicht um 90 Grad um die x-Achse gedreht. In FIG 3 verläuft daher aufgrund der Vorderansicht die Raumrichtung x wiederum von links nach rechts, die Raumrichtung y in die Bildebene hinein und die Raumrichtung z von unten nach oben.

Auf dem Boden 18 der Inkubationseinrichtung 16 sind zwei nebeneinander angeordnete Schienen 20 angeordnet, die sich gerade in der Raumrichtung y über praktisch die gesamte Ausdehnung der Inkubationseinrichtung 16 erstrecken. Auf den Schienen 20 ist eine Inkubationseinheit 22 angeordnet, die im Wesentlichen als rechteckiger Block ausgestaltet ist und mittels eines nicht näher dargestellten Antriebes entlang der Schienen 20 in der Raumrichtung y, also horizontal bewegt werden kann.

Da zahlreiche Nachweisreaktionen von der Temperatur abhängig sind, weist die Inkubationseinheit 22 mehrere Aufnahmepositionen 24 zur Zwischenlagerung der Reaktionsgefäße während der Inkubationszeit auf, wobei die Wandungen der Aufnahmepositionen mittels Heizung/Kühlung auf einer vorgegebenen, kontrollierten Temperatur gehalten werden können. Die Aufnahmepositionen 24 sind auf der den Schienen 20 gegenüberliegenden Seite der Inkubationseinheit 22 in einem regelmäßigen geometrischen Muster als kreiszylindrische Öffnungen eingebracht. Hierdurch kann eine Vielzahl von Reaktionsgefäßen gleichzeitig gelagert werden. In der FIG 2 ist aus Gründen der Übersichtlichkeit nur eine der gleichartigen Aufnahmepositionen 24 mit einem Bezugszeichen versehen.

Die Inkubationseinrichtung 16 weist weiterhin einen ersten Transferarm 26 auf. Dieser ist auf einer erhöht angeordneten, in der Raumrichtung y erstreckten Schiene 28 mit einer zweiten Schiene 30 beweglich in der Raumrichtung y gelagert. Die zweite Schiene 30 erstreckt sich senkrecht zur ersten Schiene 28 in Raumrichtung x. Die Länge der Schienen 28, 30 ist so gewählt, dass der Transferarm 26 die gewünschten, hier aber nicht näher dargestellten Stationen außerhalb der Inkubationseinrichtung 16, wie z.B. einen Reaktionsgefäßspeicher 8 oder eine Messeinheit 6 erreichen kann. An der zweiten Schiene 30 ist in Raumrichtung x beweglich eine Greifeinrichtung 32 angeordnet, die einen in Raumrichtung z beweglichen Greifer 34 umfasst, mit dem Reaktionsgefäße aufgenommen und abgesetzt werden können. Durch die (von nicht näher dargestellten Antrieben) steuerbare Beweglichkeit in Raumrichtung y auf der Schiene 28 und in Raumrichtung x auf der Schiene 30 ergibt sich in der x-y-Ebene ein rechteckiger Zugriffsbereich 36 des ersten Transferarms 26, in dem der Greifer 34 Reaktionsgefäße aufnehmen und absetzen kann. In der Darstellung der FIG 2 ist die Inkubationseinheit 22 vollständig, d.h. mit allen Aufnahmepositionen 24 im Zugriffsbereich 36 des ersten Transferarms 26 angeordnet.

Das automatische Analysegerät 1 ist für eine parallele Bearbeitung einer Vielzahl von Analysen ausgebildet. Um den Durchsatz des automatischen Analysegeräts 1 zu erhöhen, weist die Inkubationseinrichtung 16 einen zweiten Transferarm 38 auf. Dieser ist gleich zum ersten Transferarm 26 ausgebildet, d.h. auf der ersten Schiene 28 angeordnet , die an einer zur ersten Schiene 28 senkrecht erstreckten zweiten Schiene 40 angeordnet ist, und mit einer Greifeinrichtung 42 mit einem Greifer 44 ausgestattet. Auch die Länge der Schiene 40 ist so gewählt, dass der Transferarm 38 die gewünschten, hier aber nicht näher dargestellten Stationen außerhalb der Inkubationseinrichtung 16 erreichen kann. Die Beweglichkeit des zweiten Transferarms 38 ist ebenso wie beim ersten Transferarm 26 ausgebildet; durch die gleiche geometrische Erstreckung ergibt sich somit ein exakt gleich großer, rechteckiger Zugriffsbereich 46 des zweiten Transferarms 38.

Um das Problem zu vermeiden, dass es unter Umständen zu einer Kollision der Transferarme kommen kann, sind die Transferarme 26, 38 so angeordnet, dass ihre jeweiligen Zugriffsbereiche 36, 46 nicht überlappen. Speziell sind im Ausführungsbeispiel die Transferarme 26, 38 auf derselben Schiene 28 angeordnet, jedoch in Raumrichtung y voneinander durch einen Stopper 48 getrennt. Entsprechend sind die Zugriffsbereiche 36, 46 in Raumrichtung y voneinander beabstandet. Eine Berührung der beiden Transferarme 26, 38 ist somit - bei entsprechender Ausdehnung des Stoppers 48, wie hier vorgesehen - geometrisch ausgeschlossen. In anderen Ausführungsbeispielen kann auch durch mechanische Begrenzung der nicht näher dargestellten Antriebe oder steuerungssoftwareseitig eine Trennung der Zugriffsbereiche erfolgen und eine Berührung der Transferarme 26, 38 ausgeschlossen werden.

Damit beide Transferarme 26, 38 auf die Inkubationseinheit 22 zugreifen können, ist diese wie bereits beschrieben auf den Schienen 20 in y-Richtung, also horizontal bewegbar ausgestaltet. Genauer sind im Ausführungsbeispiel für die Inkubationseinheit 22 zwei Positionen vorgesehen: Die erste Position ist in FIG 2 dargestellt, nämlich derart im Zugriffsbereich 36 des ersten Transferarms 26, dass alle Aufnahmepositionen 28 im Zugriffsbereich 36 liegen. In analoger Weise ist eine zweite Position vorgesehen, in der alle Aufnahmepositionen 28 im Zugriffsbereich 46 des zweiten Transferarms 38 angeordnet sind.

Steuerungsseitig ist nunmehr keine Überwachung der Positionen der Transferarme 26, 38 hinsichtlich einer möglichen Kollision mehr notwendig, was die Steuersoftware erheblich vereinfacht. Sobald ein Transferarm 26, 38 auf die Inkubationseinheit 22 zugreifen muss, wird diese in die entsprechende Position unter dem zugreifenden Transferarm 26, 38 gefahren, sofern sie dort nicht schon angeordnet ist.

Die beschriebene Ausführungsform einer Inkubationseinrichtung 16 ermöglicht somit einen sicheren Betrieb bei gleichzeitig vereinfachter Ansteuerung der Inkubationseinrichtung 16.

### Bezugszeichenliste

- 1: Automatisches Analysegerät
- 2: Zuführungsschiene
- 4: Pipettiereinrichtung
- 6: Messeinheit
- 8: Reaktionsgefäßspeicher
- 10: Reagenzienspeicher
- 12: Datenleitung
- 14: Rechner
- 16: Inkubationseinrichtung
- 18: Boden
- 20: Schiene
- 22: Inkubationseinheit
- 24: Aufnahmeposition
- 26: Transferarm
- 28, 30: Schiene
- 32: Greifeinrichtung
- 34: Greifer
- 36: Zugriffsbereich
- 38: Transferarm
- 40: Schiene
- 42: Greifeinrichtung
- 44: Greifer
- 46: Zugriffsbereich
- 48: Stopper

- x, y, z: Raumrichtung

## Patentansprüche

1. Inkubationseinrichtung (16) für ein automatisches Analysegerät (1), die Inkubationseinrichtung (16) umfassend
- eine Inkubationseinheit (22) mit einer Anzahl von Aufnahmepositionen (24) für Reaktionsgefäße,
- einen ersten Transferarm (26) mit einer Greifeinrichtung (32) für ein oder mehrere Reaktionsgefäße, der dafür ausgebildet ist, die Greifeinrichtung (32) in einen ersten Zugriffsbereich (36) zu bewegen,
- einen zweiten Transferarm (38) mit einer Greifeinrichtung (42) für ein oder mehrere Reaktionsgefäße, der dafür ausgebildet ist, die Greifeinrichtung (42) in einen zweiten Zugriffsbereich (46) zu bewegen,
wobei der erste und der zweite Zugriffsbereich (36, 46) nicht überlappen und die Inkubationseinheit (22) derart bewegbar gelagert ist, dass zumindest eine der Aufnahmepositionen (24) den ersten und den zweiten Zugriffsbereich (36, 46) erreicht.

2. Inkubationseinrichtung (16) nach Anspruch 1, bei der die Inkubationseinheit (22) derart bewegbar gelagert ist, dass jede der Aufnahmepositionen (24) den ersten und den zweiten Zugriffsbereich (36, 46) erreicht.

3. Inkubationseinrichtung (16) nach einem der vorhergehenden Ansprüche, bei der die Inkubationseinheit (22) derart bewegbar gelagert ist, dass sie eine erste Position erreicht, in der jede der Aufnahmepositionen (24) im ersten Zugriffsbereich (36) liegt und/oder derart bewegbar gelagert ist, dass sie eine zweite Position erreicht, in der jede der Aufnahmepositionen (24) im zweiten Zugriffsbereich (46) liegt.

4. Inkubationseinrichtung (16) nach einem der vorhergehenden Ansprüche, bei der die Transferarme (26, 38) in ihrer Bewegung derart eingeschränkt sind, dass eine gegenseitige Berührung ausgeschlossen ist.

5. Inkubationseinrichtung (16) nach einem der vorhergehenden Ansprüche, bei der der erste und der zweite Zugriffsbereich (36, 46) in derselben horizontalen Ebene liegen und die Inkubationseinheit (22) horizontal bewegbar gelagert ist.

6. Inkubationseinrichtung (16) nach einem der vorhergehenden Ansprüche, bei der die Aufnahmepositionen (24) temperierbar sind.

7. Automatisches Analysegerät (1) umfassend eine Inkubationseinrichtung (16) nach einem der vorhergehenden Ansprüche.

8. Automatisches Analysegerät (1) nach Anspruch 7, ferner umfassend eine erste Einheit zur Messung einer ersten physikalischen Eigenschaft eines Reaktionsansatzes und eine zweite Einheit zur Messung einer zweiten physikalischen Eigenschaft eines Reaktionsansatzes.

9. Automatisches Analysegerät (1) nach Anspruch 8, wobei die erste und die zweite Einheit zur Messung einer physikalischen Eigenschaft eines Reaktionsansatzes jeweils zur Messung mindestens einer optischen Eigenschaft des Reaktionsansatzes ausgebildet sind.

10. Automatisches Analysegerät (1) nach Anspruch 9, wobei die erste und die zweite Einheit zur Messung einer optischen Eigenschaft eines Reaktionsansatzes ausgewählt sind aus der Gruppe Photometer, Nephelometer, Turbidimeter und Luminometer.

11. Verfahren zum automatisierten Bewegen eines oder mehrerer Reaktionsgefäße in einer Inkubationseinrichtung (16) für ein automatisches Analysegerät (1), die Inkubationseinrichtung (16) umfassend
- eine Inkubationseinheit (22) mit einer Anzahl von Aufnahmepositionen (24) für Reaktionsgefäße,
- einen ersten Transferarm (26) mit einer Greifeinrichtung (32) für Reaktionsgefäße, der dafür ausgebildet ist, die Greifeinrichtung (32) in einen ersten Zugriffsbereich (36) zu bewegen,
- einen zweiten Transferarm (38) mit einer Greifeinrichtung (42) für Reaktionsgefäße, der dafür ausgebildet ist, die Greifeinrichtung (42) in einen zweiten Zugriffsbereich (46) zu bewegen,
wobei der erste und der zweite Zugriffsbereich (36, 46) nicht überlappen und wobei die Inkubationseinheit (22) derart bewegt wird, dass zumindest eine der Aufnahmepositionen (24) den ersten und den zweiten Zugriffsbereich (36, 46) erreicht.

12. Verfahren nach Anspruch 11, bei dem die Inkubationseinheit (22) derart in eine Position bewegt wird, dass jede der Aufnahmen (24) den jeweiligen Zugriffsbereich (36, 46) des zugreifenden Transferarms (26, 38) erreicht.

13. Verfahren nach Anspruch 11 oder 12, bei dem die Transferarme (26, 38) in ihrer Bewegung derart eingeschränkt werden, dass eine gegenseitige Berührung ausgeschlossen ist.

14. Verfahren nach einem der Ansprüche 11 bis 13, wobei der erste und der zweite Zugriffsbereich (36, 46) in derselben horizontalen Ebene liegen und wobei die Inkubationseinheit (22) horizontal bewegt wird.

## Claims

1. Incubation device (16) for an automatic analysis apparatus (1), the incubation device (16) comprising
- an incubation unit (22) having a number of reception positions (24) for reaction vessels,
- a first transfer arm (26) having a gripping device (32) for one or more reaction vessels, which is configured in order to move the gripping device (32) into a first access region (36),
- a second transfer arm (38) having a gripping device (42) for one or more reaction vessels, which is configured in order to move the gripping device (42) into a second access region (46),
wherein the first and the second access region (36, 46) do not overlap, and the incubation unit (22) is mounted so that it can be moved in such a way that at least one of the reception positions (24) reaches the first and the second access region (36, 46).

2. Incubation device (16) according to Claim 1, wherein the incubation unit (22) is mounted so that it can be moved in such a way that each of the reception positions (24) reaches the first and the second access region (36, 46).

3. Incubation device (16) according to one of the preceding claims, wherein the incubation unit (22) is mounted so that it can be moved in such a way that it reaches a first position, in which each of the reception positions (24) lies in the first access region (36), and/or is mounted so that it can be moved in such a way that it reaches a second position, in which each of the reception positions (24) lies in the second access region (46).

4. Incubation device (16) according to one of the preceding claims, wherein the transfer arms (26, 38) are restricted in their movement in such a way that mutual contact is prevented.

5. Incubation device (16) according to one of the preceding claims, wherein the first and the second access region (36, 46) lie in the same horizontal plane, and the incubation unit (22) is mounted so that it can be moved horizontally.

6. Incubation device (16) according to one of the preceding claims, wherein the reception positions (24) can be thermally regulated.

7. Automatic analysis apparatus (1) comprising an incubation device (16) according to one of the preceding claims.

8. Automatic analysis apparatus (1) according to Claim 7, furthermore comprising a first unit for measuring a first physical property of a reaction mixture and a second unit for measuring a second physical property of a reaction mixture.

9. Automatic analysis apparatus (1) according to Claim 8, wherein the first and the second unit for measuring a physical property of a reaction mixture are respectively configured in order to measure at least one optical property of the reaction mixture.

10. Automatic analysis apparatus (1) according to Claim 9, wherein the first and the second unit for measuring a physical property of a reaction mixture are selected from the group: photometer, nephelometer, turbidimeter and luminometer.

11. Method for the automatic movement of one or more reaction vessels in an incubation device (16) for an automatic analysis apparatus (1), the incubation device (16) comprising
- an incubation unit (22) having a number of reception positions (24) for reaction vessels,
- a first transfer arm (26) having a gripping device (32) for one or more reaction vessels, which is configured in order to move the gripping device (32) into a first access region (36),
- a second transfer arm (38) having a gripping device (42) for one or more reaction vessels, which is configured in order to move the gripping device (42) into a second access position (46),
wherein the first and the second access region (36, 46) do not overlap, and wherein the incubation unit (22) is moved in such a way that at least one of the reception positions (24) reaches the first and the second access region (36, 46).

12. Method according to Claim 11, wherein the incubation unit (22) is moved into a position in such a way that each of the receptacles (24) reaches the respective access region (36, 46) of the accessing transfer arm (26, 38).

13. Method according to Claim 11 or 12, wherein the transfer arms (26, 38) are restricted in their movement in such a way that mutual contact is prevented.

14. Method according to one of Claims 11 to 13, wherein the first and the second access region (36, 46) lie in the same horizontal plane, and wherein the incubation unit (22) is moved horizontally.

## Revendications

1. Dispositif (16) d'incubation pour un appareil (1) d'analyse automatique, le dispositif (16) d'incubation comprenant
- une unité (22) d'incubation ayant un certain nombre de positions (24) de logement de récipients de réaction,
- un premier bras (26) de transfert ayant un dispositif (32) de préhension d'un ou de plusieurs récipients de réaction, qui est constitué pour déplacer le dispositif (32) de préhension dans une première zone (36) d'accès,
- un deuxième bras (38) de transfert ayant un dispositif (42) de préhension d'un ou de plusieurs récipients de réaction, qui est constitué pour déplacer le dispositif (42) de préhension dans une deuxième zone (46) d'accès,
la première et la deuxième zones (36, 46) d'accès ne se chevauchant pas et l'unité (22) d'incubation étant montée mobile, de manière à ce qu'au moins l'une des positions (24) de logement atteigne la première et la deuxième zones (36, 46) d'accès.

2. Dispositif (16) d'incubation suivant la revendication 1, dans lequel l'unité (22) d'incubation est montée mobile, de manière à ce que chacune des positions (24) de logement atteignent la première et la deuxième zones (36, 46) d'accès.

3. Dispositif (16) d'incubation suivant l'une des revendications précédentes, dans lequel l'unité (22) d'incubation est montée mobile, de manière à ce qu'elle atteigne une premier position, dans laquelle chacune des positions (24) de logement se trouve dans la première zone (36) d'accès, et/ou est montée mobile, de manière à ce qu'elle atteigne une deuxième position, dans laquelle chacune des positions (24) de logement se trouve dans la deuxième zone (46) d'accès.

4. Dispositif (16) d'incubation suivant l'une des revendications précédentes, dans lequel les bras (26, 38) de transfert sont limités dans leur déplacement, de manière à exclure tout contact mutuel.

5. Dispositif (16) d'incubation suivant l'une des revendications précédentes, dans lequel le première et la deuxième zones (36, 46) d'accès sont dans le même plan horizontal et l'unité (22) d'incubation est montée mobile horizontalement.

6. Dispositif (16) d'incubation suivant l'une des revendications précédentes, dans lequel les positions (24) de logement peuvent être mises en température.

7. Appareil (1) d'analyse automatique comprenant un dispositif (16) d'incubation suivant l'une des revendications précédentes.

8. Appareil (1) d'analyse automatique suivant la revendication 7, comprenant, en outre, une première unité de mesure d'une première propriété physique d'une masse réactionnelle et une deuxième unité de mesure d'une deuxième propriété physique d'une masse réactionnelle.

9. Appareil (1) d'analyse automatique suivant la revendication 8, dans lequel la première et la deuxième unités de mesure d'une propriété physique d'une masse réactionnelle sont constituées respectivement pour mesurer au moins une propriété optique de la masse réactionnelle.

10. Appareil (1) d'analyse automatique suivant la revendication 9, dans lequel la première et la deuxième unités de mesure d'une propriété optique d'une masse réactionnelle sont choisies dans le groupe d'un photomètre, d'un néphélomètre, d'un turbidimètre et d'un luminomètre.

11. Procédé de déplacement automatisé d'un ou de plusieurs récipients de réaction dans un dispositif (16) d'incubation pour un appareil (1) d'analyse automatique, le dispositif (16) d'incubation comprenant
- une unité (22) d'incubation ayant un certain nombre de positions (24) de logement de récipients de réaction,
- un premier bras (26) de transfert ayant un dispositif (32) de préhension d'un ou de plusieurs récipients de réaction, qui est constitué pour déplacer le dispositif (32) de préhension dans une première zone (36) d'accès,
- un deuxième bras (38) de transfert ayant un dispositif (42) de préhension d'un ou de plusieurs récipients de réaction, qui est constitué pour déplacer le dispositif (42) de préhension dans une deuxième zone (46) d'accès,
dans lequel la première et la deuxième zones (36, 46) d'accès ne se chevauchent pas et dans lequel on déplace l'unité (22) d'incubation, de manière à ce qu'au moins l'une des positions (24) de logement atteigne la première et la deuxième zones (36, 46) d'accès.

12. Procédé suivant la revendication 11, dans lequel on met l'unité (22) d'incubation dans une position telle que chacun des logements (24) atteigne la zone (36, 46) d'accès respectif du bras (26, 38) de transfert en préhension.

13. Procédé suivant la revendication 11 ou 12, dans lequel on limite le déplacement des bras (26, 38) de transfert, de manière à exclure tout contact mutuel.

14. Procédé suivant l'une des revendications 11 à 13, dans lequel la première et la deuxième zones (36, 46) d'accès sont dans le même plan horizontal et on déplace horizontalement l'unité (22) d'incubation.
